(19) Europäisches Patentamt
European Patent Office
Office européen des brevets

(11) **EP 4 600 907 A1**

## (12) EUROPEAN PATENT APPLICATION

(43) Date of publication:
**13.08.2025 Bulletin 2025/33**

(21) Application number: **25156132.0**

(22) Date of filing: **06.02.2025**

(51) International Patent Classification (IPC):
***G06T 11/00*** *(2006.01)*

(52) Cooperative Patent Classification (CPC):
**G06T 11/005;** G06T 2211/436; G06T 2211/441

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2024 CN 202410178070**

(71) Applicant: **Siemens Healthineers AG**
**91301 Forchheim (DE)**

(72) Inventors:
• **FENG, Kai Rui**
**Shanghai, 201318 (CN)**
• **TIAN, Yi**
**Shanghai, 200126 (CN)**
• **YANG, You Gu**
**Shanghai, 200125 (CN)**

(74) Representative: **HKW Intellectual Property PartG mbB**
**Theresienhöhe 12**
**80339 München (DE)**

(54) **METHOD FOR PROCESSING ROTATIONAL TOPOGRAM DATA, COMPUTER PROGRAM, COMPUTER-READABLE STORAGE MEDIUM AND COMPUTING DEVICE**

(57) The present invention discloses a method for processing rotational topogram data, a computer program, a computer-readable storage medium and a computing device. The method for processing rotational topogram data for computed tomography comprises: rearranging the rotational topogram data as one-dimensional data; using a transformer to process the one-dimensional data; rearranging the transformer-processed one-dimensional data as two-dimensional data, so as to obtain a recovered topogram. The present invention uses a transformer to predict missing information in the rotational topogram data, and the reconstructed topogram thereof has high image quality, reducing the limitations of the reconstructed topogram in the prior art (such as interpolation processing in the case of high stepping). To reduce the computing power requirements, the rotational topogram data can be compressed, and the lost information can then be recovered by means of a CNN.

E: Encoder, D: Decoder, R: Residual block

⊠:[mask] ↕:Rescaling ↓:Bilinear Downsampling ↑:Bilinear Upsampling ⊖:positional encoding ⊕:Element-wise addition

Fig. 4

EP 4 600 907 A1

**Description**

A noun or pronoun referring to a person in the present patent application is not limited to a specific gender.

TECHNICAL FIELD

The present invention relates to the processing of rotational topogram data in computed tomography.

BACKGROUND ART

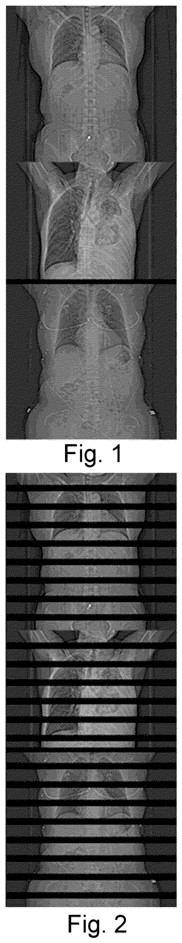

As a standardized procedure in the vast majority of commercial CT, topograms (also known as localizer radiographs or scouting images in English) provide an important reference for scanning range planning, and also provide an attenuation distribution for automatic exposure control, besides providing technicians with important clinical guidance (e.g. metal accessories or implants, etc.). Figure 1 shows topograms obtained by a conventional method, including three topograms arranged vertically.

A new method, specifically rotational projection positional imaging (Rotating Projection based Localizer Radiograph, RPLR), which can calculate attenuation more precisely to provide specific positioning of patients or organs, and improves clinical workflows by avoiding frequent gantry acceleration and deceleration, is proposed in the following paper:

[1] Cai, X., Yang, Y, Wen, X., & Tian, Y. Rotating projection based localizer radiograph: attenuation calculation optimization and patient automatic centering with parallel-beam projection scheme. In Medical Imaging 2021: Physics of Medical Imaging (Vol. 11595, pp. 750-756). SPIE. (2021)
[2] Tian, Y, Wen, X., Li, T., Zhang, G., & Chen, W.. Rotating projection based localizer radiograph which enables multiple pre-scan function for CT. In Medical Imaging 2020: Physics of Medical Imaging (Vol. 11312, pp. 945-950). SPIE. (2020)

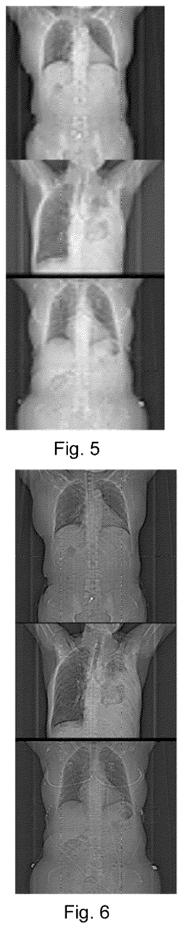

In rotational projection positional imaging, the CT tube rotates while the examination table travels in the Z direction. The tube will be exposed at the 12 o'clock position. Since the examination table has moved a certain distance between two exposures, the data of the topogram (LR) is incomplete. Fig. 2 shows topograms obtained by RPLR in the prior art, including three topograms arranged vertically, in one-to-one correspondence with the topograms of Fig. 1 (the same applies to Figs. 5 - 6).

However, RPLR still has scan speed limits due to image quality considerations. High step (pitch) can reduce data acquisition time, but projections from the sparse angle exposure (dedicated exposure angle) will cause the disadvantage of a sparse sampling pattern for a given anatomical structure or attenuation distribution, i.e. data loss. This will affect image quality compared to ordinary positional imaging or small step-size RPLR.

The following paper proposes a Transformer + CNN architecture, used for image completion tasks for multivariate images.

Wan, Z., Zhang, J., Chen, D., & Liao, J.. High-fidelity pluralistic image completion with transformers. In Proceedings of the IEEE/CVF International Conference on Computer Vision (pp. 4692-4701). (2021)

SUMMARY OF THE INVENTION

In view of the above, the present invention proposes a method for processing rotational topogram data, a computer program, a computer-readable storage medium and a computing apparatus.

In accordance with a first aspect of the present invention, there is provided a method for processing rotational topogram data for computed tomography, comprising:

rearranging the rotational topogram data as one-dimensional data;

using a transformer to process the one-dimensional data;

rearranging the transformer-processed one-dimensional data as two-dimensional data, so as to obtain a recovered topogram;

wherein the transformer is obtained by training according to the following steps:

providing multiple pairs of topogram training data, each pair of training data comprising complete topogram training data and rotational topogram training data corresponding thereto;

rearranging the rotational topogram training data as one-dimensional data;

using a transformer to process the one-dimensional data;

rearranging the transformer-processed one-dimensional data as two-dimensional data, so that the two-dimensional data corresponds to complete topogram training data.

In an embodiment, the method further comprises, prior to rearranging the rotational topogram data:

compressing the rotational topogram data, so that it has fewer pixels and a narrower grayscale distribution;

and after rearranging the transformer-processed one-dimensional data:
upsampling the two-dimensional data obtained in the abovementioned step, so that an image size thereof is equal to corresponding complete topogram training data.

In an embodiment, the method further comprises:

using a CNN to process rotational topogram data and the two-dimensional data obtained in the abovementioned step or the two-dimensional data obtained in step S108 and then upsampled;

wherein the CNN is obtained by training according to the following steps:
providing multiple pairs of topogram training data, each pair of training data comprising complete topogram training data, corresponding rotational topogram training data, and a rough a priori topogram generated by a transformer thereof; using the CNN to process the rotational topogram training data and the rough a priori topogram generated by the transformer or the rough a priori topogram generated by the transformer and then upsampled, so that the two-dimensional data is equal to corresponding complete topogram training data.

In an embodiment, the method further comprises:
using original data in the rotational topogram to replace data at a corresponding position in the recovered topogram.

In an embodiment, the rotational topogram data comprises projection data of exposure in a first direction and projection data of exposure in a second direction, or only comprises projection data of exposure in a first direction.

In an embodiment, the first direction is the 12 o'clock direction.

In an embodiment, the second direction is the direction opposite to the first direction.

According to a second aspect of the present invention, a computer program is provided which, when executed by a processor, can realize the steps of the method described above.

According to a third aspect of the present invention, a computer-readable storage medium with a computer program stored thereon is provided, characterized in that the program, when executed by a processor, can realize the steps of the method described above.

In accordance with a fourth aspect of the present invention, there is provided a computing device comprising the computer-readable storage medium described above.

The present invention uses a transformer to predict missing information in the rotational topogram data, and the reconstructed topogram thereof has high image quality, reducing the limitations of the reconstructed topogram in the prior art (such as interpolation processing in the case of high stepping). To reduce the computing power requirements, the rotational topogram data can be compressed, and the lost information can then be recovered by means of a CNN.

BRIEF DESCRIPTION OF THE DRAWINGS

Preferred embodiments of the present invention are described in detail below with reference to the drawings, to give those skilled in the art a clearer understanding of the abovementioned and other features and advantages of the present invention. In the drawings:

Figure 1 shows topograms obtained by a conventional method.

Figure 2 shows topograms obtained by prior art RPLR.

Figure 3 is a schematic flow chart of a method for processing rotational topogram data in accordance with an embodiment of the present invention.

Figure 4 is a schematic diagram of the method for processing rotational topogram data in accordance with an embodiment of the present invention.

Figure 5 is a schematic figure showing rough a priori topograms obtained by the method for processing rotational topogram data according to an embodiment of the present invention.

Figure 6 is a schematic figure showing recovered topograms obtained by the method for processing rotational topogram data in accordance with an embodiment of the present invention.

Figure 7 is a schematic flow chart of training a transformer in accordance with an embodiment of the present invention.

Figure 8 is a schematic flow chart of training a CNN in accordance with an embodiment of the present invention.

Fig. 9 is a schematic drawing of a CNN according to an embodiment of the present invention.

Fig. 10 is a schematic drawing of a discriminator used to train a CNN according to an embodiment of the present invention.

The labels used in the abovementioned accompanying drawings are as follows:

| 100 | Method for processing rotational topogram data |
|---|---|
| S101, S102, S102', S103, S104, S105, S106, S107, S107', S108, S110, S110', S112 | Steps |

DETAILED DESCRIPTION OF EMBODIMENTS

To clarify the objective, technical solutions and advantages of the present invention, the present invention is explained in further detail below through embodiments.

The present invention proposes a method of forming a topogram, the method being based on deep learning and combining a CNN (convolutional neural network) and a transformer, wherein the CNN and transformer combination displays excellent ability to process image completion tasks in the field of computer vision.

To resolve the issue of missing data caused by sparse sampling in RPLR, the following solution is used to predict and recover missing data:

Using a transformer, missing attenuation information is recovered from an image set with reduced resolution;

a projection context detail is modified by upsampling a CNN, to recover original LR image quality.

Specifically, when the transformer predicts a missing pixel, all obtainable pixels are considered, instead of only using prior context information, as is done in an autoregression method. This method can therefore also be called a bidirectional transformer.

Context recovery in RPLR is intended to find a conditional distribution $p(I|I_m)$:

$$p(I|I_m) = p(I|I_m) \cdot p(I_t|I, I_m) = p(I_t, I|I_m) = p(I_t|I_m) \cdot p(I|I_t, I_m) \qquad (1)$$

where $I$ represents the gold standard (ground truth) of a conventional LR, and $I_m$ represents the RPLR of sparse sampling containing missing data. The recovery process can be divided into two steps:

First, for a given $I_m$, a rough a priori topogram $I_t$ can be predicted, expressed as $p(I_t|I_m)$, which can be obtained by means of a transformer.

Then, with the rough a priori topogram $I_t$ and a sparse sampling topogram $I_m$, a complete image $I$ can be recovered, expressed as $p(I|I_t, I_m)$, which can use a CNN. In this embodiment, the sparse sampling topogram $I_m$ includes projection data from exposure in a positive direction (e.g. the 12 o'clock direction) and a reverse direction (e.g. 6 o'clock). In other embodiments, the sparse sampling topogram $I_m$ includes projection data from the positive direction and other directions, or includes only projection data from directly above. In fact, the abovementioned scenario may be further generalized: the sparse sampling topogram $I_m$ may include projection data of exposure in a first direction, or projection data of exposure in a first direction and a second direction, wherein the second direction is preferably the direction opposite

4

to the first direction.

In the present invention, the terms "data" and "chart" may be used interchangeably. The sparse sampling topogram $I_m$ is sometimes also called rotational topogram data/rotational topogram.

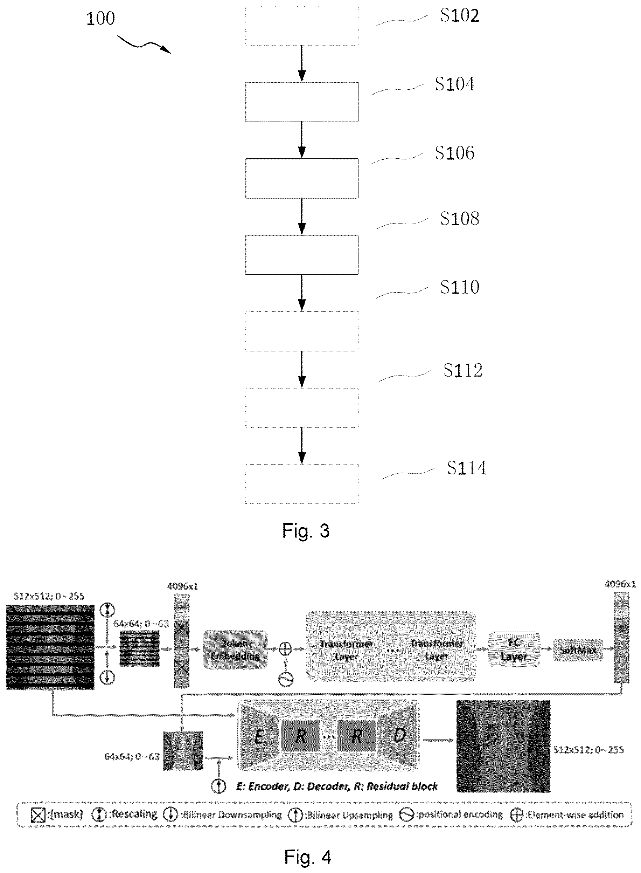

FIG. 3 is a schematic flow chart of a method 100 for processing rotational topogram data in accordance with an embodiment of the present invention. FIG. 4 is a schematic diagram of the method 100 for processing rotational topogram data in accordance with an embodiment of the present invention. As shown in FIG. 3, the method 100 for processing rotational topogram data of computed tomography comprises:

Step S102, compressing (rescaling) the rotational topogram data so that it has fewer pixels and a narrower grayscale distribution. This operation will lose some information, which needs to be restored by step S110. Taking into account a multi-head attention structure in a transformer structure, to optimize computing power, the method 100 comprises step S102 in this embodiment. Step S102 may also be omitted if computing power is not taken into account. As shown in Figure 4, an original rotational topogram with dimensions $512 \times 512$ and a grayscale distribution range of 0 - 255 is compressed to form a topogram with dimensions $64 \times 64$ and a grayscale distribution range of 0 - 63.

Step S104, rearranging the rotational topogram data as one-dimensional data. The rotational topogram data can be expressed as $I_m$, which is missing information of some pixels. As shown in Figure 4, the $64 \times 64$ two-dimensional data is converted into $4096 \times 1$ one-dimensional data containing missing pixels.

Step S106, using a transformer to process the one-dimensional data. The transformer can produce a probability distribution of missing pixel values, and reconstructs a topogram (LR) with the pixel values having the greatest probability. In this embodiment, the transformer comprises layer normalization, multi-head self-attention, and an FC layer. Unlike transformers in autoregressive models (in which elements are predicted by single-direction attention, that is, only the elements preceding the target element (token) participate in the prediction), in the prediction of this model, all valid elements will participate in the prediction of the target element, to capture all available information; therefore, it may also be referred to as a bidirectional transformer. To train this transformer model, the loss function is the cross entropy between the prediction result and the gold standard. The training of the model is described in detail below. As shown in Figure 4, the original missing pixels in the 4096 x 1 one-dimensional data are replaced by the predicted values through transformer processing.

Step S108, rearranging the transformer-processed one-dimensional data as two-dimensional data. As shown in FIG. 4, the 4096 x 1 one-dimensional data is converted into 64 x 64 two-dimensional data; this corresponds to a rough a priori topogram $I_t$. The number of pixels and the grayscale range of this two-dimensional data are the same as before the rearrangement in step S104. FIG. 5 is a schematic figure showing rough a priori topograms $I_t$ obtained by the method 100 for processing rotational topogram data according to an embodiment of the present invention.

If there is no step S102, that is, there is no loss of information due to compression, then $I_t$ is the a priori topogram, and there is no need for step S110, upsampling the size of the recovered image.

step S110, upsampling the two-dimensional data obtained in step S108, so that an image size thereof is equal to corresponding complete topogram training data. In this embodiment, upsampling from 64 x 64 to 512 x 512 is performed. Although the upsampling (bilinear interpolation) algorithm can increase image size, the recovery of image details is poor, so a CNN can be used to recover image details.

Step S112, using a CNN to process the rotational topogram data and the two-dimensional data obtained by upsampling in step S110, to obtain a recovered topogram. The CNN is characterized by having strong image detail feature extraction capability, and is used as an upsampling network, to reconstruct true texture information of the a priori topogram under the guidance of the initial topogram $I_m$ with a missing region. A guided upsampling network can be represented as:

$$I_{pred} = F_\theta\left(I_t^\uparrow \cap I_m\right) \qquad (2)$$

where $I_t^\uparrow$ represents the result of subjecting the rough a priori topogram $I_t$ to bilinear interpolation (S110), $\cap$ represents a concatenation operation in the channel dimension, and F is an upsampling network with residual blocks; these residual blocks are used for feature extraction in a latent space.

The guided upsampling network is optimized by the loss function, which includes not only the mean absolute error (MAE) $l_1$ between $I_{pred}$ and the corresponding gold standard $I$, but also includes the adversarial loss $L_{adv}$, perceptual loss $L_p$ and style loss $L_s$, so as to generate more authentic and more precise details:

$$L_{l1} = \left\| I_{pred} - I \right\|_1 \qquad (3)$$

$$L_{adv} = \log\left(1 - D_{\emptyset}(I_{pred})\right) + \log\left(D_{\emptyset}(I)\right) \qquad (4)$$

$$\min_{F} \max_{D} l_{upsampling}(\theta, \emptyset) = \alpha_1 L_{l1} + \alpha_2 L_{adv} + \alpha_2 L_{adv} + \alpha_3 L_p + \alpha_4 L_s \qquad (5)$$

where $L_{l1}$ represents the loss with the $l_1$ metric, $\|I_{pred} - I\|_1$ represents the absolute error between the corresponding pixels of $I_{pred}$ and $I$, and subscript 1 denotes the arithmetic difference (in other embodiments, the standard deviation $l_2$ between $I_{pred}$ and the corresponding gold standard $I$ may also be used).

In this embodiment, the loss weights are set through experiment as follows: $\alpha_1$ = 1.0, $\alpha_2$ = 0.1, $\alpha_3$ = 1, $\alpha_4$ = 250.

FIG. 6 is a schematic figure showing recovered topograms $I$ obtained by the method 100 for processing rotational topogram data in accordance with an embodiment of the present invention. As shown in Fig. 6, in the recovered topograms$I$, missing information is predicted. To improve the authenticity of the image, the method 100 for processing the rotational topogram data may also include:

Step S114, using original data in the rotational topogram to replace data at the corresponding position in the recovered topogram $I$.

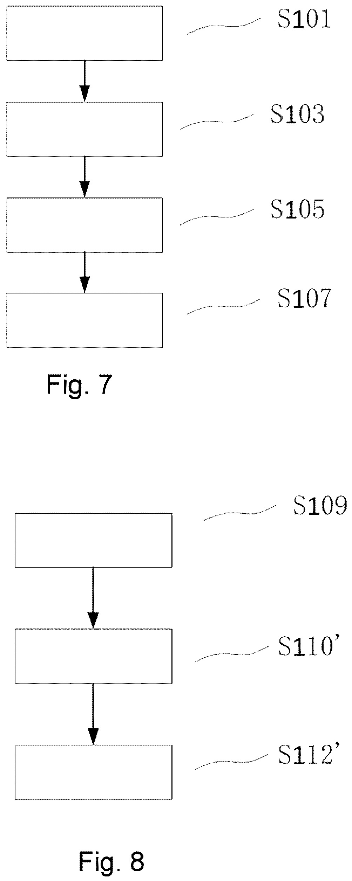

Figure 7 is a schematic flow chart of training a transformer in accordance with an embodiment of the present invention. Steps S103, S105 and S107 in Figure 7 are respectively similar to steps S104, S106 and S108 in Figure 3, so are described only briefly below. As shown in Figure 7, the transformer is obtained by training according to the following steps:

Step S101, providing multiple pairs of topogram training data, each pair of training data including complete topogram training data and rotational topogram training data corresponding thereto. These complete topogram training data are used as a gold standard to bring about algorithm convergence.

Step S103, rearranging the rotational topogram training data as one-dimensional data.

Step S105, using a transformer to process the one-dimensional data.

Step S107, rearranging the transformer-processed one-dimensional data as two-dimensional data, such that the two-dimensional data is equal to the corresponding complete topogram map training data (if the image data was compressed before the transformer, this is the compressed complete topogram training data corresponding to the complete topogram training data). In the present application, "complete" means that the data acquired by the scan is complete, but after subsequent processing, a portion of the information may be lost due to compression.

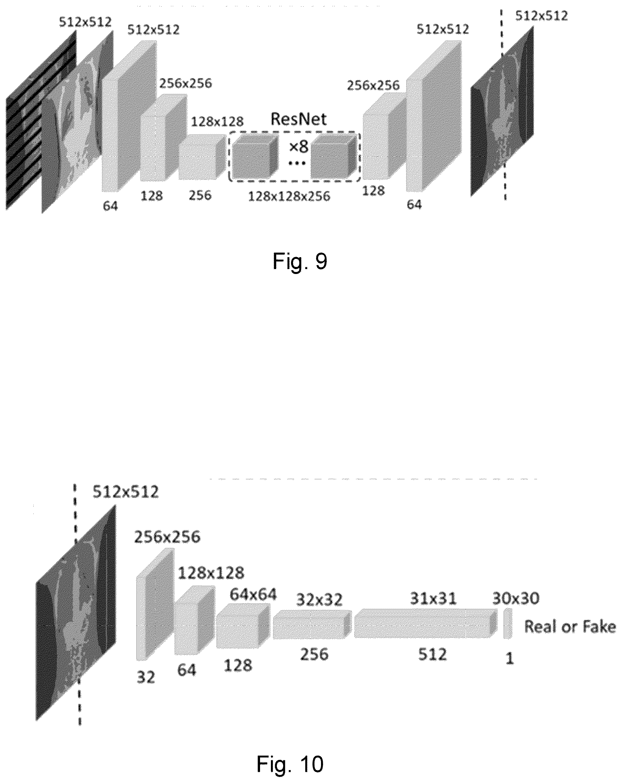

FIG. 8 is a schematic flow chart of training a CNN according to an embodiment of the present invention, and FIG. 9 is a schematic diagram of a CNN according to an embodiment of the present invention. Steps S102', S107', S110', S112' in Figure 8 are respectively similar to step S102 in Figure 3, step S107 in Figure 7, and steps S110 and S112 in Figure 3, so are described only briefly below. As shown in Figs. 8 and 9, the CNN is obtained by training according to the following steps:

Step S109, providing multiple pairs of topogram training data, each pair of training data including complete topogram training data, corresponding rotational topogram training data, and a rough a priori topogram generated by a transformer thereof. These complete topogram training data are used as a gold standard to bring about algorithm convergence.

Step S110', upsampling (by bilinear interpolation) the two-dimensional data of the abovementioned rough a priori topogram, so that the pixel size of the two-dimensional data is equal to the corresponding complete topogram training data.

Step S112', using a CNN to process the rotational topogram training data and the two-dimensional data obtained in step S110', so that the processed two-dimensional data is equal to the corresponding complete topogram training data.

If the rotational topogram training data and the rough a priori topogram generated by the transformer have the same pixel size, then the upsampling of step S110' is not required.

During training, a discriminator can be used to judg whether the topogram is obtained from an upsampling network, thereby helping with CNN training. Fig. 10 is a schematic drawing of a discriminator according to an embodiment of the present invention.

The invention also provides a computer program which, when executed by a processor, can implement the steps of the method 100 for processing rotational topogram data.

The invention also provides a computer-readable storage medium on which is stored a computer program which, when executed by a processor, can implement the steps of the method 100 for processing rotational topogram data.

The invention also provides a computing device comprising a computer-readable storage medium as described above.

The present invention uses a transformer to predict missing information in the rotational topogram data, and the reconstructed topogram thereof has high image quality, reducing the limitations of the reconstructed topogram in the prior art (such as interpolation processing in the case of high step size). To reduce the computing power requirements, the rotational topogram data can be compressed, and the lost information can then be recovered by means of a CNN.

The above are merely preferred embodiments of the present invention, which are not intended to limit it. Any amendments, equivalent substitutions or improvements etc. made within the spirit and principles of the present invention shall be included in the scope of protection thereof.

**Claims**

1. A method for processing rotational topogram data for computed tomography, comprising:

   step S104, rearranging the rotational topogram data as one-dimensional data;
   step S106, using a transformer to process the one-dimensional data;
   step S108, rearranging the transformer-processed one-dimensional data as two-dimensional data, so as to obtain a recovered topogram;
   wherein the transformer is obtained by training according to the following steps:

   step S101, providing multiple pairs of topogram training data, each pair of training data comprising complete topogram training data and rotational topogram training data corresponding thereto;
   step S103, rearranging the rotational topogram training data as one-dimensional data;
   step S105, using a transformer to process the one-dimensional data;
   step S107, rearranging the transformer-processed one-dimensional data as two-dimensional data, so that the two-dimensional data corresponds to complete topogram training data.

2. The method as claimed in claim 1, **characterized by** further comprising the following before step S104:

   step S102, compressing the rotational topogram data, so that it has fewer pixels and a narrower grayscale distribution;
   and after step S108:
   step S110, upsampling the two-dimensional data obtained in step S108, so that an image size thereof is equal to corresponding complete topogram training data.

3. The method as claimed in claim 1 or 2, **characterized by** further comprising:

   step S112, using a CNN to process rotational topogram data and the two-dimensional data obtained in step S108 or the two-dimensional data obtained in step S108 and then upsampled;
   wherein the CNN is obtained by training according to the following steps:

   step S109, providing multiple pairs of topogram training data, each pair of training data comprising complete topogram training data, corresponding rotational topogram training data, and a rough a priori topogram generated by a transformer thereof;
   step S112', using the CNN to process the rotational topogram training data and the rough a priori topogram generated by the transformer or the rough a priori topogram generated by the transformer and then upsampled, so that the processed two-dimensional data is equal to corresponding complete topogram training data.

4. The method as claimed in any one of claims 1 - 3, **characterized by** further comprising:
   step S114, using original data in the rotational topogram to replace data at a corresponding position in the recovered topogram.

5. The method as claimed in any one of claims 1 - 4, **characterized in that** the rotational topogram data comprises projection data of exposure in a first direction and projection data of exposure in a second direction, or only comprises projection data of exposure in a first direction.

6. The method as claimed in claim 5, **characterized in that** the first direction is the 12 o'clock direction.

7. The method as claimed in claim 5 or 6, **characterized in that** the second direction is the direction opposite to the first direction.

8. A computer program which, when executed by a processor, can realize the steps of the method as claimed in any one of claims 1 - 7.

9. A computer-readable storage medium with a computer program stored thereon, **characterized in that** the program, when executed by a processor, can realize the steps of the method as claimed in any one of claims 1 - 7.

10. A computing device comprising the computer-readable storage medium as claimed in claim 9.

Fig. 1

Fig. 2

Fig. 3

Fig. 4

Fig. 5

Fig. 6

S101

S103

S105

S107

Fig. 7

S109

S110'

S112'

Fig. 8

512x512 512x512 256x256 128x128 ResNet ×8 ... 512x512 256x256 512x512

64 128 256 128x128x256 128 64

Fig. 9

512x512 256x256 128x128 64x64 32x32 31x31 30x30 Real or Fake

32 64 128 256 512 1

Fig. 10

**EP 4 600 907 A1**

## EUROPEAN SEARCH REPORT

Application Number

EP 25 15 6132

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | FENG KAIRUI ET AL: "Rotating projection-based localizer radiograph: enable sparse sampling for dose-saving and scan speed enhancement with transformer combined CNN", 20240401, vol. 12925, 21 February 2024 (2024-02-21), pages 129252E-129252E, XP060203964, ISSN: 1605-7422, DOI: 10.1117/12.3006877 ISBN: 978-1-5106-7154-6 * the whole document * | 1-10 | INV. G06T11/00 |
| Y | TIAN Y ET AL: "Rotating projection based localizer radiograph for which enables multiple pre-scan function for CT", PROGRESS IN BIOMEDICAL OPTICS AND IMAGING - PROCEEDINGS OF SPIE - MEDICAL IMAGING 2020: PHYSICS OF MEDICAL IMAGING 2020 SPIE USA, vol. 11312, 16 March 2020 (2020-03-16), XP093289587, DOI: 10.1117/12.2549904 * the whole document * | 1-10 | |
| Y | WAN ZIYU ET AL: "High-Fidelity Pluralistic Image Completion with Transformers", 2021 IEEE/CVF INTERNATIONAL CONFERENCE ON COMPUTER VISION (ICCV), IEEE, 10 October 2021 (2021-10-10), pages 4672-4681, XP034092546, DOI: 10.1109/ICCV48922.2021.00465 [retrieved on 2022-02-10] * the whole document * | 1-10 | **TECHNICAL FIELDS SEARCHED       (IPC)**<br><br>G06T |

The present search report has been drawn up for all claims

| Place of search | Date of completion of the search | Examiner |
|---|---|---|
| Munich | 25 June 2025 | Werling, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

14

# EP 4 600 907 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Medical Imaging 2021: Physics of Medical Imaging. *SPIE*, 2021, vol. 11595, 750-756
- **TIAN, Y** ; **WEN, X.** ; **LI, T.** ; **ZHANG, G.** ; **CHEN, W.** Rotating projection based localizer radiograph which enables multiple pre-scan function for CT.. *Medical Imaging 2020: Physics of Medical Imaging*, 2020, vol. 11312, 945-950
- **WAN, Z.** ; **ZHANG, J.** ; **CHEN, D.** ; **LIAO, J.** High-fidelity pluralistic image completion with transformers. *Proceedings of the IEEE/CVF International Conference on Computer Vision*, 2021, 4692-4701